# EUROPÄISCHE PATENTANMELDUNG

(11) **EP 0 617 350 A1**
(43) Veröffentlichungstag der Anmeldung: **28.09.1994**
(21) Anmeldenummer: 93104682.5
(22) Anmeldetag: 22.03.1993
(51) Int. Cl.: G05D 23/19, H04M 11/00

(54) **Verfahren und Vorrichtung zur Fernsteuerung von Betriebsvorgängen sowie zur Selbstdiagnose von Heizungs- und Klimaanlagen**

(71) Anmelder: Viessmann Werke GmbH & Co., D-35107 Allendorf (Eder) (DE)
(72) Erfinder: Hofbauer,Peter, Prof. Dr.-Ing., D-51503 Rösrath-Hoffnungsthal (DE); Arend, Hans-Otto, Dipl.-Ing., D-35108 Allendorf (DE); Skupin, Konrad, Dipl.-Ing., D-35088 Battenberg/Eder (DE)
(74) Vertreter: Patentanwälte Beetz - Timpe - Siegfried Schmitt-Fumian - Mayr

(57) **Zusammenfassung**

Die Erfindung betrifft Verfahren und eine Vorrichtung zur Fernsteuerung von Heizungs- und Klimaanlagen sowie zur Selbstdiagnose mit Fernübertragung von Betriebsinformationen an externe Einrichtungen.

Die Fernsteuerung erfolgt vorzugsweise über das Telefonnetz, wobei die Befehlsinformation nach Verbindungsaufbau zwischen einem Telefon (2) und einer mit der Heizungs- oder Klimaanlage verbundenen Kommunikationseinrichtung (1) durch Drücken einer Tastenkombination nach dem DTMF-Code erfolgt, der von der Kommunikationseinrichtung (1) decodiert und umgesetzt wird. Bei der Selbstdiagnose fragt die Kommunikationseinrichtung (1) Betriebsdaten von der Steuereinrichtung der Heizungs- oder Klimaanlage ab und übermittelt sie automatisch an Empfangseinrichtungen, wie Fax (4), Cityruf (5) oder eine Leitstelle (6).

## Beschreibung

Die Erfindung betrifft Verfahren und Vorrichtungen zur Fernsteuerung von Betriebsvorgängen und Betriebsparametern und insbesondere von Schaltvorgängen sowie zur Selbstdiagnose mit Fernübertragung von Betriebsinformationen, insbesondere Betriebsparametern mit Servicerelevanz, die für Heizungs- und Klimaanlagen vorgesehen sind.

Dem heutigen Stand der Technik entsprechende Heizungs- und Klimaanlagen sind in der Regel mikroprozessorgesteuert und zeichnen sich durch sehr komplexe Funktion, Bedienung und Überwachung aus, da derartige Anlagen z.B. witterungs- bzw. außentemperaturgeführt oder auch fremdgesteuert arbeiten. Heizungsanlagen weisen so beispielsweise neben der Vorlauftemperaturregelung auch zahlreiche andere Funktionen, wie Brauchwassererwärmung, Umschaltung bei bi- oder multivalenten Systemen, z.B. in Kombination mit Wärmepumpen und/oder Solaranlagen, Durchführung von Zeitprogrammen wie Nachtabsenkung, etc., auf.

Dementsprechend ist auch, trotz 'intelligenter', prozessorgesteuerter Steuer- bzw. Regeleinrichtungen, ein relativ hoher Einstell- und Bedienungsaufwand mit solchen Systemen verbunden, wobei die komplexen Funktionen und die zahlreichen Sensoren und anzusteuernden Bauteile, wie Pumpen, Mischer und andere Stellglieder, auch eine komplexe Überwachung zur Gewährleistung der Betriebssicherheit erfordern.

Nach dem gegenwärtigen Entwicklungsstand ist es weder möglich, Heizungs- und Klimatisierungssysteme durch direkten Zugriff ohne Zwischenschaltung diskreter Schaltvorrichtungen durch Fernübertragung von Informationen, etwa von einem Telefon aus, anzusteuern, zu programmieren oder zu schalten, noch sind solche Systeme in der Lage, selbständig automatisch Informationen über ihren Betriebszustand, z.B. über Ausfälle von Systemkomponenten oder der gesamten Anlage, oder andere betriebs- oder servicerelevante Informationen zu erfassen und automatisch an eine vorgegebene Adresse, Empfangsstation, Leitstelle o.dgl. so weiterzugeben, daß am gewünschten Empfangsort die relevante Information verfügbar ist und ggfs. automatisch entsprechende Maßnahmen ausgelöst werden.

Im folgenden wird zur Vereinfachung auf Heizungssysteme Bezug genommen, wobei die Ausführungen in analoger Weise auch, mutatis mutandis, für Klimatisierungssysteme gelten.

Ein bei herkömmlichen Heizungssystemen mit Öl- oder Gasbrenner typischer Störfall liegt z.B. im Brennerausfall, der üblicherweise durch eine Warnlampe am Brenner oder auch durch ein akustisches Signal angezeigt wird. Der Bediener der Anlage muß dann, wenn er die Störung bemerkt hat, etwa durch Drücken eines entsprechenden Knopfes den Versuch machen, die Störung manuell zu beheben und den Brenner wieder in Betrieb zu setzen.

Die Übermittlung einer servicerelevanten Information, etwa eines Brennerausfalls oder des Ausfalls eines Temperaturfühlers, etc., an eine Empfangsstelle muß bisher stets durch menschliches Tätigwerden erfolgen, um zum Beispiel einen Service-Techniker zu verständigen und ihm den vermuteten Fehler mitzuteilen.

Damit ist auch ein effizienter, gezielter Service nicht möglich, da sich der Service-Techniker erst vor Ort über den Gesamtumfang eines Schadens oder den Servicezustand einer Anlage selbst informieren muß und folglich beispielsweise ein umfangreiches Sortiment von Ersatzteilen, die möglicherweise gebraucht werden könnten, mit sich führen muß.

Computergesteuerte bzw. mikroprozessorgesteuerte Systeme, die eine Selbstdiagnose durchführen, sind auf verschiedenen technischen Gebieten bekannt, beispielsweise bei Kopierern und Kraftfahrzeugen. In diesen Fällen wird jedoch die betreffende, durch Selbstdiagnose ermittelte Information nur angezeigt und/oder gespeichert, wobei die gespeicherte Information vom Servicepersonal nur mit einer speziellen Einrichtung gelesen oder abgerufen werden kann, und zwar z.B. direkt am Gerät, etwa über einen sog. Diagnosestecker, wie er in Kraftfahrzeugen verwendet wird, der mit einem entsprechend programmierten und ausgelegten Computersystem verbunden wird.

Diese bekannten Selbstdiagnosesysteme übermitteln entsprechend nicht selbständig und mit einem gerätegebundenen Zeitprogramm Informationen an andere Orte, sondern müssen gezielt abgefragt werden.

Gerade bei Heizungs- und Klimaanlagen besteht jedoch ein besonderes Bedürfnis, Betriebsinformationen von der Anlage automatisch zu einem vorgegebenen, räumlich entfernten Ort zu übertragen, sowie, Informationen, wie beispielsweise Befehle, in möglichst einfacher Weise und ohne besondere Einrichtungen von einem räumlich entfernten Ort zur Anlage zu übermitteln, wenn möglich mit Rückmeldung über die erfolgreiche Durchführung des Befehls. So besteht z.B. das Bedürfnis, Heizungs- und Klimaanlagen von einer zentralen Stelle aus (Herstellerfirma, Servicefirma, Hausmeisterwohnung, Pforte, etc.) zu überwachen.

Der Erfindung liegt entsprechend die Aufgabe zugrunde, unter Erfüllung der vorstehenden Forderungen Verfahren und Vorrichtungen anzugeben, mit denen sich mindestens die folgenden Funktionen durchführen lassen:
(α) Übertragung, Empfang und Ausführung von Informationen und Befehlen, die von einer Sendestelle aus über eine Datenleitung, vorzugsweise eine übliche Telekommunikationsleitung, einschließlich Funk, oder über eine Direktleitung an eine Heizungs- oder Klimaanlage übermittelt werden, und zwar durch menschliche oder automatisch gesteuerte Eingabe an der Sendestelle;
(β) Selbstdiagnose mit automatischer Übermittlung des Diagnoseergebnisses bzw. sich daraus ergebender Informationen an eine oder mehrere vorgegebene Empfangsstellen, vorzugsweise über eine übliche Telekommunikationsleitung, einschließlich Funk, oder über eine direkte Datenverbindung,
wobei in beiden Fällen vorzugsweise bestehende herkömmliche Informationsübertragungssysteme, z.B. Telekommunikationssysteme der Post, für die Datenübertragung in beiden Richtungen verwendet werden sollen.

Die Aufgabe wird gemäß den unabhängigen Ansprüchen gelöst. Die abhängigen Ansprüche betreffen vorteilhafte Ausführungsformen der Erfindungskonzeption.

Das erfindungsgemäße Verfahren zur Übertragung, zum Empfang sowie zur Bearbeitung von Befehlsinformationen, die von einer externen Befehlseinrichtung stammen, bei Heizungs- und Klimaanlagen ist gekennzeichnet durch folgende Schritte:
(I) Herstellung einer Datenverbindung zwischen der Befehlseinrichtung und einer Kommunikationseinrichtung, die der Steuer- oder Regeleinrichtung der Heizungs- oder Klimaanlage zugeordnet ist,
(II) Codierung der zu übertragenden Befehlsinformation in der Befehlseinrichtung,
(III) Übertragung der codierten Befehlsinformation von der Befehlseinrichtung zur Kommunikationseinrichtung,
(IV) Empfang und Decodierung der empfangenen Befehlsinformation von der Befehlseinrichtung in der Kommunikationseinrichtung
   und
(V) Bearbeitung bzw. Ausführung der decodierten Befehlsinformation in der Kommunikationseinrichtung und/oder der Steuer- oder Regeleinrichtung der Heizungs- oder Klimaanlage.

Dieses Verfahren entspricht der vorteilhaften Variante, daß die Datenverbindung zwischen der Befehlseinrichtung und der Kommunikationseinrichtung unter Benützung einer Telekommunikationsleitung, beispielsweise einer Telefonleitung, erfolgt, wobei die Befehlseinrichtung z.B. ein Telefonapparat mit Frequenzwahl ist und die Codierung der zu übertragenden Befehlsinformation vorteilhaft unter Benützung des telefonspezifischen Frequenzwahlcodes erfolgt, der empfangsseitig in der Kommunikationseinrichtung decodiert und weiterverarbeitet wird. Diese Verfahrensweise ist besonders vorteilhaft, da die ohnehin beim Telefon der Befehlseinrichtung vorhandene DTMF-Codierung nicht zum Wählen, sondern, nach Verbindungsaufbau, zur Informationscodierung und -übertragung verwendet wird.

Eine alternative, einfachere erfindungsgemäße Verfahrensvariante, die sich für die Ansteuerung von Heizungs- und Klimaanlagen von einer Befehlsstelle wie etwa einer Leitstelle aus eignet, die durch eine direkte Leitung, also ohne zwischengeschaltete Telekommunikationsleitung, mit der Kommunikationseinrichtung verbunden ist, ist durch folgende Schritte gekennzeichnet:
(I) Herstellung einer Datenverbindung zwischen der Leitstelle und einer Kommunikationseinrichtung, die der Steuer- oder Regeleinrichtung der Heizungs- oder Klimaanlage zugeordnet ist, in Form einer Direktverbindung,
(III) Übertragung der Befehlsinformation von der Leitstelle zur Kommunikationseinrichtung,
(IV) Empfang der Befehlsinformation von der Leitstelle in der Kommunikationseinrichtung
   und
(V) Bearbeitung bzw. Ausführung der Befehlsinformation in der Kommunikationseinrichtung und/oder der Steuer- oder Regeleinrichtung der Heizungs- oder Klimaanlage.

Diese Verfahrensweise weist entsprechend den Schritt II der Codierung der zu übertragenden Befehlsinformation nicht auf, wobei hier unter Codierung die für das Telekommunikationssystem spezifische Wahlcodierung (Frequenzwahl, DTMF-Verfahren) gemeint ist, die nach der zuvor erläuterten Verfahrensweise zur Codierung der Befehlsinformation verwendet wird..

Die zweite erfindungsgemäße Teilaufgabe der Selbstdiagnose von Heizungs- und Klimaanlagen und der automatischen Übertragung des Diagnoseergebnisses an externe Stellen wird durch ein Verfahren zur Selbstdiagnose von Heizungs- und Klimaanlagen und zur automatischen Übertragung des Diagnoseergebnisses bzw. sich daraus ergebender Informationen von einer Kommunikationseinrichtung, die der Steuer- oder Regeleinrichtung der Heizungs- oder Klimaanlage zugeordnet ist, zu einer Empfangseinrichtung gelöst; dieses Verfahren ist gekennzeichnet durch folgende Schritte:
(A) Erfassung von diagnoserelevanten Daten von der Heizungs- oder Klimaanlage durch die Kommunikationseinrichtung,
(B) Bearbeitung der erfaßten Daten in der Kommunikationseinrichtung mit Ermittlung der zu übertragenden Daten,
(C) Codierung der zu übertragenden Daten in der Kommunikationseinrichtung,
(D) Herstellung einer Datenverbindung zwischen der Kommunikationseinrichtung und der Empfangseinrichtung,
(E) Übertragung der zu übertragenden, codierten Daten von der Kommunikationseinrichtung zur Empfangseinrichtung,
(F) Empfang und Decodierung der von der Kommunikationseinrichtung empfangenen Daten in der Empfangseinrichtung
   und
(G) Bearbeitung und/oder Anzeige und/oder Ausdruck und/oder Speicherung der decodierten Daten oder sich daraus ergebender Informationen in der Empfangseinrichtung.

Falls die Empfangseinrichtung mit der Kommunikationseinrichtung durch eine direkte Datenleitung, also ohne Einschaltung einer Telekommunikationsverbindung, wie etwa einer Telefonleitung, verbunden ist, ist das Verfahren durch folgende Schritte gekennzeichnet:
(A) Erfassung von diagnoserelevanten Daten von der Heizungs- oder Klimaanlage durch die Kommunikationseinrichtung,
(B) Bearbeitung der erfaßten Daten in der Kommunikationseinrichtung mit Ermittlung der zu übertragenden Daten,
(D) Herstellung einer Datenverbindung zwischen der Kommunikationseinrichtung und der Leitstelle in Form einer Direktverbindung,
(E) Übertragung der Daten von der Kommunikationseinrichtung zur Leitstelle,
(F) Empfang der von der Kommunikationseinrichtung empfangenen Daten in der Leitstelle
   und
(G) Bearbeitung und/oder Anzeige und/oder Ausdruck und/oder Speicherung der Daten oder sich daraus ergebender Informationen in der Leitstelle.

Die erfindungsgemäße Kommunikationseinrichtung für Heizungs- und Klimaanlagen ist der Heizungs- oder Klimaanlage örtlich zugeordnet und kann mit ihr sowohl räumlich als auch funktionell integriert sein; sie dient zur Übertragung, zum Empfang sowie zur Bearbeitung von Befehlsinformationen, die von einer externen Befehlseinrichtung stammen, sowie zur Selbstdiagnose der Heizungs- oder Klimaanlage und zur automatischen Übertragung des Diagnoseergebnisses bzw. sich daraus ergebender Informationen zu einer oder mehreren Empfangseinrichtungen.

Die Kommunikationseinrichtung gemäß der Erfindung weist folgende Merkmale auf:
- Die Kommunikationseinrichtung weist folgende wesentliche Funktionsbaugruppen auf:
   - Ein Mikrocomputersystem mit einer CPU, einem RAM bzw. Schreiblesespeicher, einem ROM und einer I/O-Einheit, die untereinander durch einen Adress- bzw. Datenbus verbunden sind,
   - eine mit der I/O-Einheit in Verbindung stehende oder mit ihr integrierte Übertragungseinrichtung, die entweder eine serielle Schnittstelle, die über eine Leitung zur direkten Datenübertragung mit einer Leitstelle oder einer Empfangseinrichtung verbindbar ist,
      oder ein Terminal, das über einen Bus mit der I/O-Einheit verbunden ist,
      oder ein Modem ist, das mit dem Bus des Mikrocomputersystems sowie mit der I/O-Einheit in Verbindung steht und über Vermittlungskomponenten und über eine Leitung mit einem Datenübertragungsnetz, vorzugsweise einem Telefonnetz, verbindbar ist,
      und
   - einen Busanschluß, der mit der Steuer- oder Regeleinrichtung der Heizungs- oder Klimaanlage verbindbar ist und entweder direkt oder über die I/O-Einheit mit dem Bus des Mikrocomputersystems verbunden ist;
- die Kommunikationseinrichtung weist folgende wesentliche Funktionen auf:
   - Direkter Empfang einer nichtcodierten Befehlsinformation von einer Befehlseinrichtung über eine direkte Leitung
      oder
   - Empfang einer codierten Befehlsinformation von einer Befehlseinrichtung und Decodierung der Befehlsinformation
      und
   - Bearbeitung bzw. Ausführung der Befehlsinformation mit dem Mikrocomputersystem, das über den Busanschluß mit der Steuer- oder Regeleinrichtung der Heizungs- oder Klimaanlage verbunden ist und im Zusammenwirken mit dem Mikrocomputersystem der Steuer- oder Regeleinrichtung Bearbeitung bzw. Ausführung der Befehlsinformation veranlaßt;
   - Erfassung diagnoserelevanter Daten von der Heizungs- oder Klimaanlage unter Zusammenwirken mit dem Mikrocomputersystem der Steuer- oder Regeleinrichtung der Heizungs- oder Klimaanlage,
   - Bearbeitung der erfaßten Daten mit Ermittlung der Daten, die zu einer oder mehreren vorgegebenen Empfangseinrichtungen zu übertragen sind,
      und
   - entweder direkte Übertragung der Daten zur Leitstelle über die direkte Leitung
      oder
   - Codierung der zu übertragenden Daten, Herstellung einer Datenverbindung über eine Leitung mit einer Empfangseinrichtung über das Modem und Übertragung der codierten Daten zur Empfangseinrichtung.

Die Erfindung wird im folgenden anhand von vorteilhaften Ausführungsformen unter Bezug auf die Zeichnungen näher erläutert.

Es zeigen:
- Fig. 1: eine schematische Darstellung eines Fernwirk-Gesamtsystems zur Erläuterung des erfindungsgemäßen Fernsteuerungs- und Selbstdiagnoseverfahrens,
- Fig. 2: ein Blockschaltbild der erfindungsgemäßen Kommunikationseinrichtung
und
- Fig. 3A, 3B: Flußdiagramme zur Erläuterung der erfindungsgemäßen Verfahren.

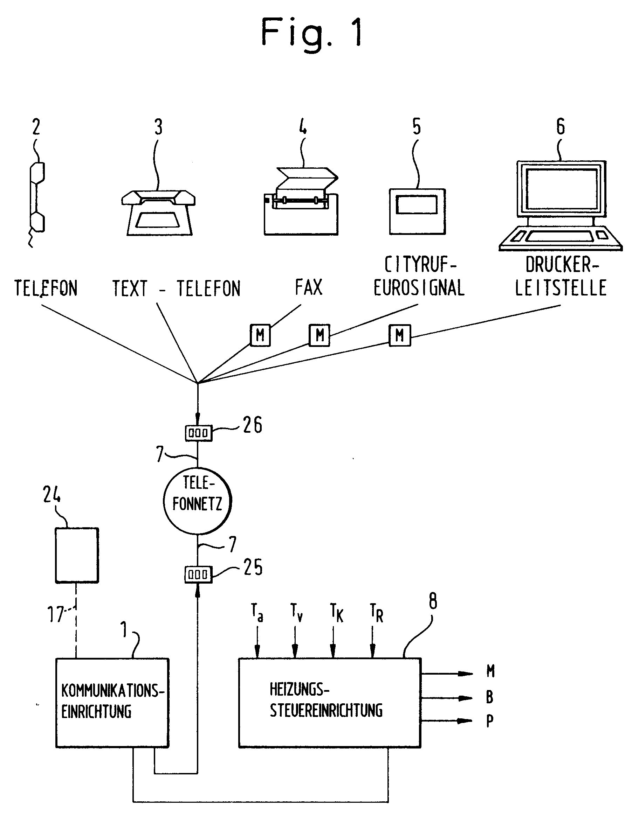

In Fig. 1 ist die Fernwirkverbindung einer Steuer- oder Regeleinrichtung 8 einer Heizungsanlage (im folgenden kurz als Steuereinrichtung bezeichnet) mit Befehlseinrichtungen 2 bis 6 (die ggfs. auch als Empfangseinrichtungen dienen können) über Leitungen 7 eines Telefonnetzes unter Einschaltung der erfindungsgemäßen Kommunikationseinrichtung 1 schematisch dargestellt. Dieses System ist in der Lage, sowohl das erfindungsgemäße Fernsteuerungsverfahren, dessen zugrundeliegendes Prinzip Gegenstand der Ansprüche 1 und 2 ist, als auch das erfindungsgemäße Selbstdiagnoseverfahren, dessen Prinzip Gegenstand der Ansprüche 3 und 4 ist, durchzuführen.

Die Steuereinrichtung 8 der Heizungsanlage ist eine digitale, computer- bzw. mikroprozessorgesteuerte Einrichtung, an die z.B. mehrere Temperaturfühler angeschlossen sind, welche die Außentemperatur Tₐ, die Vorlauftemperatur T_{V} des Heizungsvorlaufs nach dem Vorlaufmischer, die Kesseltemperatur T_{K} bzw. die Raumtemperatur T_{R} erfassen. Die Steuereinrichtung gibt andererseits Steuersignale bzw. Betriebsstrom an einen Mischermotor M des Vorlaufmischers, den Brenner B des Heizungskessels bzw. eine Pumpe P ab, die beispielsweise eine Umwälzpumpe für den Heizkreis ist. Insoweit entspricht die Steuereinrichtung 8 dem üblichen Stand der Technik.

Die Kommunikationseinrichtung 1 ist das Bindeglied zwischen der Steuereinrichtung 8 und der Leitung 7 des Telefonnetzes bzw. den daran endseitig über eine Telefonsteckdose 26 angeschlossenen Befehlseinrichtungen 2 bis 6.

Sie stellt gewissermaßen eine Schnittstelle für die Steuereinrichtung 8 dar. Sie ist beispielsweise über eine übliche Telefonsteckdose 25 mit dem Telefonnetz verbunden. Bei der Kommunikationseinrichtung 1 handelt es sich nicht um eine Kommunikationsschnittstelle, wie sie z.B. bei Modems üblich ist; sie weist vielmehr eine eigene Bedienschnittstelle sowie eine Schnittstelle zu einem darin enthaltenen Modem auf, das wiederum die Schnittstelle zum Telefonnetz darstellt.

Je nach nationalen Vorschriften kann, wie dies beispielsweise für die Bundesrepublik Deutschland der Fall ist, parallel zur Kommunikationseinrichtung 1 noch ein Telefon an der schematisch dargestellten Telefonsteckdose 25 oder an der Kommunikationseinrichtung 1 als Endgerät vorgesehen sein. Am anderen Ende der Leitung 7 des Telefonnetzes sind über eine Telefonsteckdose 26 z.B. ein übliches Telefon 2, ein Text-Telefon 3, ein Faxgerät 4, ein Cityruf-Gerät bzw. ein Eurosignal-Gerät 5 und/oder ein Computer (z.B. ein PC, Laptop, etc., vorteilhaft mit Drucker) als Leitstelle 6 angeschlossen.

Das Telefon 2, das Text-Telefon 3 und die Leitstelle 6 sowie ggfs. auch das Faxgerät 4 können sowohl als Befehlseinrichtungen im Sinne von Anspruch 1, also zur Übermittlung von Befehlsinformationen an die Kommunikationseinrichtung 1 und damit an die Steuereinrichtung der Heizungsanlage, als auch als Empfangseinrichtung im Sinne von Anspruch 3, also zum Empfang von Selbstdiagnoseinformationen von der Steuereinrichtung 8, sowie auch für Rückmeldungen über ausgeführte Befehlsinformationen verwendet werden. Diese Doppelfunktion trifft für das Faxgerät 4 dann zu, wenn, wie z.B. in der Bundesrepublik Deutschland vorgeschrieben, parallel dazu ein Telefonapparat als Endgerät angeschlossen ist, der ebenfalls als Befehlseinrichtung verwendet werden kann.

Das in Fig. 1 dargestellte Gesamtsystem stellt somit ein Fernwirksystem dar, das sowohl die Fernwirkung auf die Heizungsanlage über Befehlseingabe als auch die Fernüberwachung der Heizungsanlage, insbesondere also die Selbstdiagnose und den Empfang entsprechender Mitteilungen von der Kommunikationseinrichtung 1, erlaubt.

Wenn das Telefon 2, das Text-Telefon 3 und/oder die Leitstelle 6 (z.B. mit parallelem Telefon als Endgerät) nur zur Befehlseingabe verwendet werden sollen, ist (nach dem derzeit z.B. in der Bundesrepublik Deutschland angewandten Impulswahlverfahren (IWV)) ein Anschluß über ein Modem M nicht erforderlich, da zur Informationsübertragung von einer solchen Befehlseinrichtung zur Kommunikationseinrichtung 1 zur Codierung der zu übertragenden Information nach Aufbau der Telekommunikationsverbindung etwa nach dem Impulswahlverfahren vorzugsweise und äußerst vorteilhaft der Code des Mehrfrequenzverfahrens (MFV, DTMF-Verfahren) des Telekommunikationsnetzes verwendet wird, der bei modernen Telefonapparaten z.B. durch einfaches Drücken einer Tastenkombination einschaltbar ist.

Gemäß dem in Anspruch 1 spezifizierten Verfahren erfolgt eine Fernwirkung auf die Heizungsanlage, etwa zum Einoder Ausschalten, zum Umprogrammieren der Nachtabsenkungszeiten, zur Erhöhung der Vorlauftemperatur, zur Erhöhung des Raumtemperatur-Sollwerts, etc., prinzipiell wie folgt:

### Schritt I:

Eine Bedienungsperson wählt über das Telefon 2, das Text-Telefon 3 oder über die Leitstelle 6 (direkt oder über ein dort angeschlossenes Telefon) die Kommunikationseinrichtung (bzw. ein dort als Endgerät mit angeschlossenes Telefon (nicht gezeichnet) an, z.B. nach dem Impulswahlverfahren. Das Wählen kann dabei auch mit einem programmierten Wählautomaten erfolgen. Eine Leitstelle 6, die ein Computersystem, wie z.B. einen PC, einen Laptop, o.dgl., umfaßt, kann den Wählvorgang auch nach einem vorgegebenen Programm automatisch zu einer vorgegebenen Zeit durchführen.

### Schritt II:

Wenn die Telefonverbindung hergestellt ist, wird die Befehlseinrichtung, falls die Verbindung nach dem Impulswahlverfahren aufgebaut wurde, auf das Mehrfrequenz-Wählverfahren (MFV) umgeschaltet. Das Gerät arbeitet jetzt nach dem DTMF (Dual-Tone Multi Frequency) -Verfahren, bei dem jeder Taste der Tastatur eine bestimmte Frequenz zugeordnet ist.

Jetzt erfolgt die Eingabe der Befehlsinformation über die Tastatur des Telefons 2 oder des Text-Telefons 3, die somit nach dem DTMF-Verfahren frequenzcodiert wird.

Die Eingabe kann auch durch die Leitstelle 6 erfolgen, und zwar sowohl durch ein dort als Endgerät angeschlossenes Telefon als auch durch eine in der Leitstelle 6 hardwaremäßig oder softwaremäßig realisierte DTMF-Sendereinrichtung, welche die zu übertragende Befehlsinformation in den DTMF-Code umsetzt.

Es kann vorteilhafterweise in der Kommunikationseinrichtung 1 vorgesehen sein, daß vor der eigentlichen Eingabe der Befehlsinformation eine Benutzeridentifizierung oder eine Geheimnummer, welche die Berechtigung des Zugriffs auf die Kommunikationseinrichtung 1 beinhalten, eingegeben werden muß.

### Schritt III:

Die Übertragung der codierten Befehlsinformation erfolgt über Leitungen 7 des Telefonnetzes. Die Übertragung kann dabei auch teilweise oder ganz durch Funk, einschließlich Satellitenfunk, erfolgen.

### Schritt IV:

Die Kommunikationseinrichtung 1 empfängt die Befehlsinformation und decodiert sie nach dem DTMF-Verfahren.

### Schritt V:

Die Bearbeitung der erhaltenen decodierten Daten erfolgt in der Kommunikationseinrichtung 1. Der darin enthaltene Mikrocomputer bzw. dessen CPU übernimmt zumindest eine Vorverarbeitung der Befehlsdaten und ermittelt, welche Daten und Befehle zur Steuereinrichtung 8 der Heizungsanlage übermittelt werden müssen, um dort die endgültige Befehlsausführung zu realisieren.

Dabei können Prioritätsebenen für die Datenverarbeitung vorgesehen sein.

Nach Schritt V kann vorteilhafterweise ein weiterer Schritt der Rückmeldung vorgesehen sein, bei dem eine beliebige Information über die erfolgte Bearbeitung bzw. Ausführung der Befehlsinformation von der Kommunikationseinrichtung 1 über die Telekommunikationsverbindung an eine oder mehrere ausgewählte Befehlseinrichtungen (Telefon 2, Text-Telefon 3, Faxgerät 4, Cityruf-Gerät bzw. Eurosignal-Gerät 5, Leitstelle 6) übermittelt wird, vorzugsweise, solange die von der Befehlseinrichtung aufgebaute Datenverbindung noch besteht.

Die Rückmeldung wird dabei in geeigneter Weise codiert, vorteilhaft über ein Modem. Zum Empfang der Rückmeldung muß die Befehlseinrichtung mit einer entsprechenden Decodiereinrichtung, vorteilhaft einem Modem, ausgerüstet sein. Die Rückmeldung kann z.B. auf dem Display des Text-Telefons 3 oder dem Display der Leitstelle 6 angezeigt und/oder vom Faxgerät 4 oder von einem der Leitstelle 6 zugeordneten Drucker ausgedruckt werden. Im Fall des Cityrufs oder des Eurosignals erfolgt DTMF-Codierung.

Die Rückmeldung kann ferner auch nach dem ABB'-Verfahren durch Übertragung einer codierten Textnachricht an ein sog. Delegatic-Telefon erfolgen.

Die Schritte I und II können auch in der Reihenfolge getauscht durchgeführt werden: Bei der mit einem Computersystem ausgerüsteten Leitstelle 6 kann beispielsweise die Codierung der zu übertragenden Befehlsinformation auch vor dem Aufbau der Datenverbindung vorgenommen und die codierte Befehlsinformation ggfs. in einem Zwischenspeicher abgelegt werden, woraus sie dann abgerufen werden kann, wenn die Datenverbindung aufgebaut ist.

Allgemein ist das erfindungsgemäße Verfahren nicht auf die Codierung der Befehlsinformation nach dem DTMF-Verfahren beschränkt. Sie richtet sich vorzugsweise nach dem Wähl- bzw. Codiersystem, das für das Telekommunikationssystem verwendet wird, das für die Übertragung der Befehlsinformation herangezogen wird; dieses Codiersystem kann von Land zu Land verschieden sein.

Die Datenverbindung wird nach Abschluß von Schritt V oder Schritt VI in der üblichen Weise, d.h. z.B. durch Auflegen des Telefonhörers, beendet.

Das oben erläuterte erfindungsgemäße Verfahren erfordert entsprechend keinen separaten Handsender, den die Bedienungsperson bei sich tragen müßte und der nach Aufbau der Telefonverbindung auf die Sprechmuschel des als Befehlseinrichtung verwendeten Telefons gehalten werden müßte.

Hierin liegt ein wesentlicher Vorteil des erfindungsgemäßen Verfahrens und der erfindungsgemäßen Vorrichtung.

Das Verfahren kann auch in digitalen Telekommunikationsnetzen eingesetzt werden, z.B. solchen, die nach dem ISDN-Verfahren betrieben werden. Wenn beide Telekommunikationsteilnehmer an das ISDN-Netz angeschlossen sind, wird die Wahl des Teilnehmers, z.B. von der Befehlseinrichtung aus, nach dem DTMF-Verfahren, also durch Frequenzwahl, durchgeführt, so daß kein Umschalten auf das DTMF-System nach Aufbau der Datenverbindung erforderlich ist. Die übermittelte Information wird bei diesem System über Modems codiert und decodiert. Abgesehen von diesem Unterschied wird das erfindungsgemäße Verfahren bei digitalen Telekommunikationssystemen in prinzipiell gleicher Weise durchgeführt.

In Fig. 1 ist ferner eine Leitstelle 24 eingezeichnet, die über eine gestrichelt dargestellte Leitung 17 mit der Kommunikationseinrichtung 1 verbunden ist. Es ist im Rahmen der Erfindung nämlich möglich, Befehlsinformationen auch direkt, d.h. ohne Zuhilfenahme einer Telekommunikationseinrichtung, über eine leitungsmäßige Direktverbindung, der Kommunikationseinrichtung 1 zuzuleiten. Die Leitstelle 24 kann dabei prinzipiell den gleichen Aufbau haben wie etwa die Leitstelle 6 mit dem Unterschied, daß die Leitstelle 24 mit einer Direktleitung mit der Kommunikationseinrichtung in Verbindung steht. Diese Ausführungsform der erfindungsgemäßen Vorrichtung bzw. die entsprechende Verfahrensvariante können dann angewandt werden, wenn die Befehlseinrichtung bzw. Leitstelle 24 nicht allzu weit von der Kommunikationseinrichtung 1 entfernt ist, wobei eine Leitungslänge von etwa 1000 m als Grenze anzusehen ist. Die Kommunikationseinrichtung 1 kann dabei so ausgebildet sein, daß sie Befehlsinformationen entweder von Befehlseinrichtungen über ein Telekommunikationsnetz oder von einer Befehlseinrichtung mit direkter Leitungsverbindung oder auf beide Weisen erhalten kann.

Bei Direktanschluß einer Leitstelle 24 weist das erfindungsgemäße Verfahren folgende Schritte auf:

### Schritt I:

In diesem Schritt wird die Datenverbindung über die Leitung 17 zwischen der Leitstelle 24 und der Kommunikationseinrichtung 1 hergestellt; üblicherweise wird eine solche Direktleitung, etwa zu einem Terminal in einer Hausmeisterwohnung oder bei einer nahen Servicestelle, fest installiert, so daß der Schritt der Herstellung der Datenverbindung in diesen Fällen entfällt. Auch eine direkte Funkverbindung ist möglich.

### Schritt II:

Dieser Schritt der Codierung der zu übertragenden Befehlsinformation, unter Ausnutzung des für ein Telekommunikationssystem spezifischen Codesystems, etwa nach dem DTMF-Verfahren, entfällt bei diesem Verfahren.

### Schritt III:

Die Übertragung der Befehlsinformation von der Leitstelle 24 zur Kommunikationseinrichtung 1 erfolgt über die Datenverbindung 17, d.h. über eine Direktleitung, vorteilhaft eine zwei- bzw. dreiadrige Leitung, oder etwa per Funk.

### Schritt IV:

Der Empfang der Befehlsinformation von der Leitstelle 24 geschieht in der Kommunikationseinrichtung 1 durch eine darin vorgesehene Schnittstelle, vorzugsweise eine serielle Schnittstelle. Da hierbei keine Decodierung erforderlich ist, gelangt die Information direkt zur Schnittstelle und damit in das Mikrocomputersystem der Kommunikationseinrichtung 1.

### Schritt V:

Die Bearbeitung bzw. Ausführung der erhaltenen Befehlsinformation in der Kommunikationseinrichtung 1 geschieht wie oben unter Schritt V in Zusammenhang mit der Datenübertragung über ein Telekommunikationssystem erläutert.

Auch im Fall der direkten Datenübertragung zur Kommunikationseinrichtung 1 von einer Leitstelle 24 können die oben erläuterten Weiterbildungen vorliegen. So kann insbesondere auch eine Rückmeldung über erfolgte Bearbeitung bzw. Ausführung der Befehlsinformation erfolgen, die wiederum über die direkte Datenverbindung 17 über die Schnittstelle der Kommunikationseinrichtung 1 direkt an die Leitstelle 24 ausgegeben wird, wo eine entsprechende Anzeige über ein Display, ein Ausdruck über einen Drucker und/oder eine Sprachausgabe aus einem mit vorgegebenen Sprachbausteinen versehenen Speicher vorgenommen werden können.

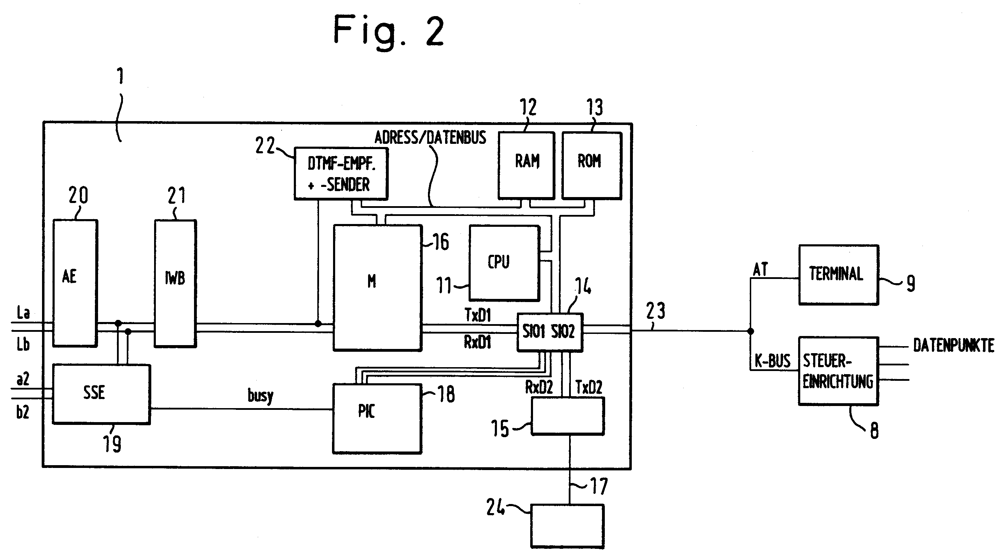

Die oben in ihrem prinzipiellen Aufbau sowie ihren prinzipiellen Funktionen erläuterte erfindungsgemäße Kommunikationseinrichtung 1 ist im einzelnen in Form von Funktionsblöcken und ihrer Verknüpfung in Fig. 2 dargestellt.

Die Kommunikationseinrichtung 1 von Fig. 2 ist dabei vorzugsweise duplexfähig bzw. voll duplexfähig.

Die Kommunikationseinrichtung 1 weist als zentrale Baugruppe ein Mikrocomputersystem auf, das aus einer CPU 11, einem RAM 12, einem ROM 13 und einer I/O-Einheit 14 besteht, die untereinander durch einen Adreß- bzw. Datenbus verbunden sind. Die Anbindung an ein Telekommunikationsnetz geschieht über die Leitungen La und Lb sowie die Leitungen a2 und b2, an die z.B. ein Telefon als Endgerät angeschlossen werden kann. Eine Anruferkennung AE 20 erkennt ankommende Anrufe, etwa von Befehlseinrichtungen, wie oben erläutert, und leitet nach Zustandekommen der Datenverbindung die Information zum Mikrocomputersystem weiter. Ferner ist eine übliche Schleifenstromerkennung SSE 19 vorgesehen, die von einem Mikrocontroller PIC 18 gesteuert wird, der über eine Schnittstelle mit der I/O-Einheit 14 verbunden ist. Die serielle Schnittstelle SIO1 ist mit den Leitungen TxD1 für die Übertragung von Daten und einer Leitung RxD1 für den Empfang von Daten verbunden. Die serielle Schnittstelle SIO2 14 steht ihrerseits über einen Busanschluß 23 und einen K-Bus mit der Steuereinrichtung 8 der Heizungsanlage in Datenverbindung, die ihrerseits noch mit einem Terminal 9 verbunden sein kann, wobei für den Datentransfer mit dem Terminal AT-ähnliche Kommandos verwendet werden können. Beide Schnittstellen bilden die I/O-Einheit 14.

Die auf der linken Seite der in Fig. 2 dargestellten Kommunikationseinrichtung 1 vorgesehenen Telefonleitungsanschlüsse La, Lb, a2 und b2 sind für die Datenkommunikation über ein Telekommunikationsnetz vorgesehen. Die direkte Leitung 17 führt andererseits zu einer externen Leitstelle 24, die ohne Zwischenschaltung eines Telekommunikationsnetzes mit der Schnittstelle 15 verbunden ist, die vorzugsweise eine serielle Schnittstelle ist, etwa vom Typ RS232.

Mittels eines Adapters, der die Umsetzung der Datenleitungen auf V24-Pegel vornimmt, können mit dem Terminal 9 die verschiedenen Funktionen der Kommunikationseinrichtung 1 bedient werden. Die Schnittstelle 15, die über die Leitungen TxD2 und RxD2 mit der I/O-Einheit 14 verbunden ist, kann auch mit der I/O-Einheit 14 integriert sein.

Fig. 2 zeigt also die beiden möglichen Kommunikationswege des Datenaustauschs zwischen externen Stationen und der Kommunikationseinrichtung 1, der sowohl über ein Telekommunikationssystem (La, Lb) als auch über eine direkte Leitung 17 (Leitstelle 24) erfolgen kann. Ferner ist ersichtlich, daß die Kommunikationseinrichtung 1 über einen Datenbus mit der Steuereinrichtung 8 verbunden ist, so daß von der Kommunikationseinrichtung 1 erhaltene Befehle nach Bearbeitung der Steuereinrichtung 8 zugeleitet und Informationen von dort erhalten werden können.

Neben der ersten Hauptfunktion des Empfangs von Befehlsinformationen von externen Stationen hat die Kommunikationseinrichtung 1 die zweite Hauptfunktion der Selbstdiagnose, deren Prinzip im Verfahrensanspruch 3 definiert ist. Die Kommunikationseinrichtung 1 führt entsprechend bezüglich dieser zweiten Hauptfunktion folgende wesentliche Schritte durch:

### Schritt A:

In diesem Schritt werden diagnoserelevante Daten von der Heizungs- oder Klimaanlage über deren Steuereinrichtung 8 durch die Kommunikationseinrichtung 1 erfaßt.

Derartige diagnoserelevante Daten bzw. Informationen können insbesondere sein:
Kurzschluß/Unterbrechung des Außentemperaturfühlers
Kurzschluß/Unterbrechung des Kesseltemperaturfühlers
Kurzschluß/Unterbrechung des Vorlauftemperaturfühlers
Kurzschluß/Unterbrechung des Speichertemperaturfühlers
Kurzschluß/Unterbrechung des Rücklauftemperaturfühlers
Störung des Brenners
Störung eines externen Eingangs (z.B. einer Neutralisationseinrichtung)
Störung der Kommunikation mit der Steuereinrichtung (HV-Bus bzw. K-Bus der Steuereinrichtung gestört, etc.)
Kurzschluß/Unterbrechung des Raumtemperaturfühlers.

Darüber hinaus kann die Kommunikationseinrichtung 1, gesteuert durch das Mikrocomputersystem 11 bis 14 und insbesondere auf der Basis des im ROM 13 gespeicherten Betriebsprogramms, noch weitere Überwachungsaufgaben wahrnehmen, die zu diagnoserelevanten Daten führen, insbesondere:
Grenzwertüberwachung von Meßgrößen, insbesondere Temperaturen (Außentemperatur, Kesseltemperatur, Vorlauftemperatur, Speichertemperatur, Rücklauftemperatur, Abgastemperatur, etc.)
Überwachung der Betriebsstunden von bestimmten Heizungskomponenten, wie Brenner, Pumpen etc.
Überwachung der Anzahl der Schaltspiele von Schalteinrichtungen, wie Relais, Schütze udgl..

Auf diese Weise kann die Kommunikationseinrichtung 1 nicht nur die Funktion und funktionswesentliche Teile der Heizungsanlage und ihrer Steuereinrichtung 8 überwachen, sondern auch andere servicerelevante Daten, wie Überschreitung einer vorgegebenen Brennerlaufzeit oder Überschreitung vorgegebener Schaltspieleanzahlen von elektromechanischen Schalteinrichtungen, überwachen.

### Schritt B:

Die Bearbeitung in dieser Weise erfaßter Daten erfolgt in der Kommunikationseinrichtung 1 so, daß auch diejenigen Daten ermittelt werden, die zu einer externen Empfangseinrichtung zu übertragen sind. Empfangseinrichtungen können diejenigen Einrichtungen sein, die in Fig. 1 oben dargestellt sind, d.h. ein Telefon 2, ein Text-Telefon 3, ein Faxgerät 4, ein Cityruf-Gerät 5 bzw. ein Eurosignal-Gerät 5 oder eine Leitstelle 6, die vorzugsweise ein Computerterminal darstellt. Diese Empfangseinrichtungen können, wie oben erläutert, direkt durch eine direkte Leitung 17 oder indirekt über Modem und Telekommunikationssystem mit der Kommunikationseinrichtung 1 Informationen austauschen.

### Schritte C und D:

Zur Übertragung der zu übertragenden Daten über ein Telekommunikationssystem weist die Kommunikationseinrichtung 1 ein Modem M 16 auf, das über die Leitungen TxD1 und RxD1 mit der I/O-Einrichtung 14 sowie über den Adreß- und Datenbus mit dem Mikrocomputersystem verbunden ist. Das Modem M 16 ist ferner über den Bus mit einer DTMF-Empfangseinrichtung und -sendeeinrichtung 22 verbunden, die auch mit dem Modem M 16 integriert sein kann. Die vom Mikrocomputersystem 11 bis 13 aufbereitete, zu übertragende Information wird vom Modem 16 codiert und über eine Impulswahlbaugruppe IWB21 über das Telefonnetz übertragen. Im Fall der Verwendung eines ISDN-Netzes erfolgt z.B. die Anwahl der Empfangseinrichtung über die DTMF-Sendeeinrichtung 22 nach dem DTMF-Verfahren. Die Schritte C und D können auch in ihrer Reihenfolge umgetauscht durchgeführt werden, wie bereits oben näher erläutert.

Auch eine Textübermittlung nach dem ABB'-Verfahren über das Telefonnetz ist erfindungsgemäß möglich (modifiziertes MFV).

### Schritte E und F:

Die Empfangseinrichtung (2; 3; 4; 5; 6) decodiert in der bereits beschriebenen Weise die ankommende Information und führt die entsprechende Reaktion darauf durch, die in einem Ausdruck eines Faxgeräts 4, im Ansprechen eines Cityruf-Geräts 5 oder eines Eurosignal-Geräts 5 oder im Display oder Ausdruck eines Computers an der Leitstelle 6 bestehen kann. Im Fall der Übermittlung eines Textes nach dem ABB'-Verfahren erfolgt der Empfang (und ebenso eine Übermittlung in Gegenrichtung) mit einem geeigneten Endgerät, z.B. einem sog. Delegatic-Telefon.

### Schritt G:

Dementsprechend führen die Empfangseinrichtungen die Bearbeitung der empfangenen decodierten Daten in der vorgegebenen bzw. vorprogrammierten Weise durch.

Auf diese Weise können Zustandsberichte über den Betriebszustand einer Heizungs- oder Klimaanlage und insbesondere spezifische, detaillierte Störungsmeldungen mit Angabe der Störungsquelle an ausgewählte Empfänger übermittelt werden, insbesondere den Herstellerbetrieb oder Servicebetriebe, so daß entsprechende Servicebetriebe in der Lage sind, mit den erforderlichen Ersatzteilen und ohne unnötiges Material eine gezielte und effektive Reparatur einer gestörten Heizungs- oder Klimaanlage unter wirtschaftlichsten Bedingungen vorzunehmen.

Gleiches gilt auch für die Selbstdiagnose der Heizungs- oder Klimaanlage, wenn das Diagnoseergebnis über die direkte Leitung 17 an eine Leitstelle 24 weitergeleitet wird, wobei hier der Unterschied besteht, daß kein Modem, d.h. keine Codierung und Decodierung, erforderlich ist.

Die Kommunikationseinrichtung 1 kann ihrerseits auch direkte analoge Eingänge und Ausgänge aufweisen, insbesondere Eingänge für Temperaturfühler und andere Signalquellen, sowie analoge Ausgänge für Meßzwecke sowie zur Ansteuerung von Stellgliedern, Betriebsorganen u.dgl.

Bei der Selbstdiagnose und der Übermittlung des Diagnoseergebnisses an Empfangsstellen, wie oben erläutert, ist vorteilhaft auch eine Datenrückübertragung von den entsprechenden Empfangsstellen (2 bis 6) vorgesehen, wobei die Übertragung von Informationen von diesen Stellen in gleicher Weise erfolgen kann, wie oben bei dem Verfahren zur Fernsteuerung beschrieben.

Insbesondere dann, wenn das Diagnoseergebnis einen sofortigen Eingriff an der Heizungs- oder Klimaanlage erfordert, der von der Kommunikationseinrichtung 1 selbst nicht oder noch nicht vorgenommen wurde, kann dieser Eingriff von den externen Stationen 2 bis 6 durchgeführt werden.

Auch für die Übermittlung des Selbstdiagnoseergebnisses gilt, wie oben für die Fernsteuerung von externen Stationen aus erläutert, daß die Datenübermittlung in beiden Richtungen sowohl über Telekommunikationsnetze mit Impulswahl als auch über Telekommunikationsnetze mit Frequenzwahl vorgenommen werden kann. Die in Fig. 2 dargestellte Kommunikationseinrichtung 1 weist dazu die DTMF-Empfangs- und -Sendeeinrichtung 22 auf, die mit dem Adreß- bzw. Datenbus des Mikrocomputersystem verbunden ist und DTMF-Signale abgibt und empfangen kann, also eine Mehrfrequenzcodierung bzw. -decodierung entsprechender Informationen vornimmt, wie oben erläutert.

Die in Fig. 2 dargestellten Funktionsblöcke der Kommunikationseinrichtung 1 sind vorzugsweise frei konfigurierbar, auch durch Fern-Konfiguration. Dies bedeutet, daß eine freie Zuordnung festgelegt werden kann, welche Datenpunkte (Speicherbereiche) in der Steuereinrichtung 8 und ggfs. auch im Speicher 12 bzw. 13 der Kommunikationseinrichtung 1 angesprochen werden, welche Bearbeitung mit den Daten erfolgt, und welche Maßnahmen eingeleitet werden sollen. Entsprechende Routinen bzw. Programme sind in an sich bekannter Weise im Festwertspeicher bzw. in Zwischenspeichern abgelegt.

Nach einer bevorzugten Ausführungsform wird nur dann eine Fehler- oder Störungsmeldung von der Kommunikationseinrichtung 1 an eine Empfangseinrichtung weitergeleitet, wenn die Fehler- oder Störungsmeldung mindestens eine vorgegebene Zeit angestanden hat, um Fehlmeldungen, etwa aufgrund von Netzspannungsstörungen, zu vermeiden.

In der Kommunikationseinrichtung 1 kann ferner vorteilhafterweise vorgesehen sein, im Fall gravierender Störungen, etwa des Ausfalls funktionswichtiger Komponenten, wie z.B. von Temperaturfühlern, bei Brennerstörung u.dgl., eine sofortige Abschaltung der Gesamtanlage zu veranlassen, so daß in diesen Fällen eine entsprechende Mitteilung über die erfolgte Außerbetriebnahme der Anlage und die zugrundeliegenden Fehler an die Empfangseinrichtung übertragen wird.

Die Konfigurierung der Kommunikationseinrichtung 1 kann insbesondere über Hardwarecodierungen in an sich bekannter Weise, über HV-Bus mittels PC, Laptop u.dgl., oder über das Terminal 9 bzw. die Leitstelle 24 erfolgen.

Im Speicher der Steuereinrichtung 8 sind bestimmte als Datenpunkte bezeichnete Speicherbereiche bzw. Speicheradressen vorgegeben, die von der Kommunikationseinrichtung 1 abgefragt bzw. bearbeitet, d.h. verändert werden können (Fernsteuerung).

Beispiele für typische derartige Funktionsänderungen sind etwa:
Umschaltung der Betriebsart (z.B. Sperren eines Folgekessels)
Vorgabe einer Minimaltemperatur
Umschaltung von modulierendem Betrieb auf stufigem Betrieb (Umschaltung Ölbetrieb/Gasbetrieb)
Externes Sperren der Energiezufuhr
Externes Sperren eines Kessels
Externes Sperren eines Brenners
Umschaltung/Umprogrammierung einer Schaltuhrfunktion.

Die obigen Beispiele sind typische Beispiele für Zielfunktionen, die über das erfindungsgemäße Fernsteuerungsverfahren durchgeführt werden können.

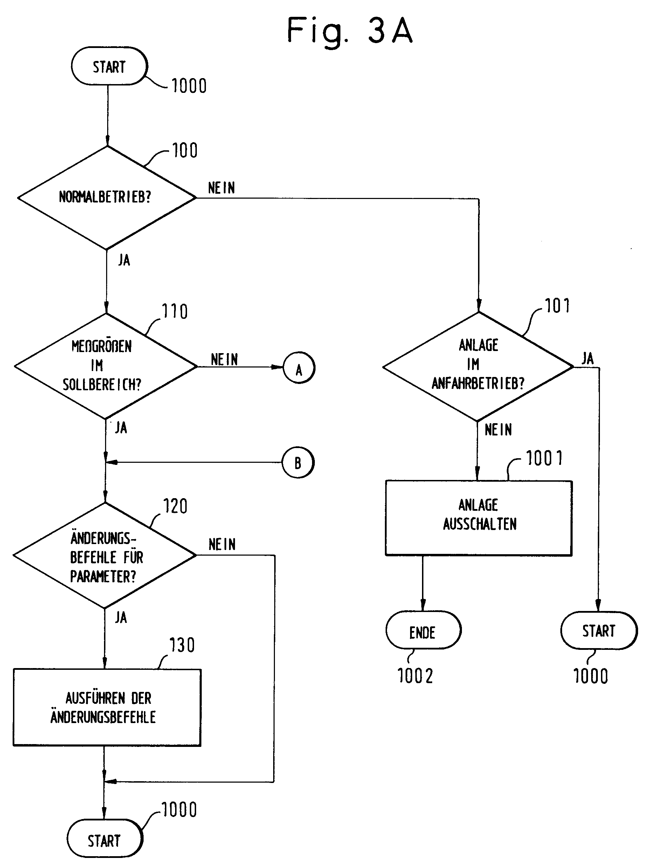

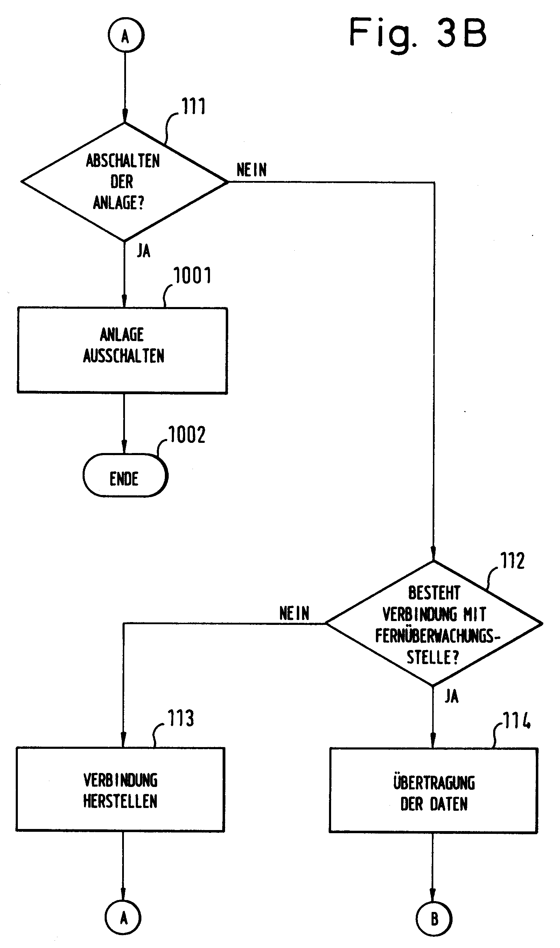

Die Fig. 3A und 3B zeigen ein Flußdiagramm einer Ausführungsform eines Verfahrens, das die Kommunikationseinrichtung durchführen kann.

In einem ersten Schnitt (100) wird geprüft, ob die Anlage im Normalbetrieb arbeitet. Ist dies nicht der Fall und befindet sich die Anlage auch nicht im Anfahrbetrieb (101), so wird die Abschaltung der Anlage (1001) eingeleitet bzw. fortgeführt, und das Steuerprogramm endet, wenn die Anlage vollständig heruntergefahren ist (1002). Arbeitet die Anlage im Normalbetrieb, so werden alle Meßgrößen dahingehend überprüft (110), ob sie im Sollbereich, d.h. im zulässigen Bereich liegen. Liegen einzelne Meßwerte nicht im Sollbereich (Zweig A), so wird dies der Fernüberwachungsstelle von der Kommunikationseinrichtung gemeldet (112 bis 114); bei schwerwiegenden Störungen wird das Notausprogramm gestartet (111) und die Anlage abgeschaltet (1001). Das Programm fährt nach der Übertragung der Daten an die Fernüberwachungsstelle (Zweig B) (114) mit der Abfrage (120) fort, ob Parameteränderungsbefehle vorliegen. Ist dies nicht der Fall, kehrt das Programm zum Anfang (1000) zurück. Liegen Änderungsbefehle an, so werden diese in einem weiteren Schritt (130) ausgeführt, und das Programm kehrt erst danach wieder zum Anfang (1000) zurück. Bei Schritt (130) kann auch das ordnungsgemäße Abschalten der Anlage eingeleitet werden.

Die Selbstdiagnose kann im Rahmen der vorliegenden Erfindung sowohl eigenständig durch die Kommunikationseinrichtung 1 als auch nach Initiierung durch eine externe Befehlseinrichtung durchgeführt werden. In beiden Fällen kann hierfür auch ein Zeitprogramm zugrundeliegen, das die Selbstdiagnosezeiten festlegt.

Bei zeitlich überlappender Selbstdiagnose und Fernsteuerung durch externe Befehlseinrichtungen können je nach Bedeutung der betreffenden Verfahrensschritte Prioritäten festgelegt werden, insbesondere Prioritäten von Vorgängen bzw. Verfahrensschritten oder Operationen, die sicherheitsrelevant sind.

Nach einer besonders bevorzugten Ausführungsform der Erfindungskonzeption ist die Kommunikationseinrichtung 1 mit der Steuereinrichtung 8 der Heizungs- oder Klimaanlage integriert, wobei vorzugsweise in diesem Fall nur ein Mikrocomputersystem vorgesehen ist, das sowohl die Funktionen der Kommunikationseinheit 1 als auch die der Steuereinrichtung 8 in sich vereinigt, so daß die separate Installation einer Kommunikationseinheit 1 dann entfällt.

Nachdem der Betreiber bzw. Benutzer einer erfindungsgemäß überwachten Heizungs- oder Klimaanlage daran interessiert sein kann, über das Ergebnis einer Selbstdiagnose oder über von dritter Seite extern erfolgte Änderungen von Datenpunkten und Programmen informiert zu werden, ist nach einer vorteilhaften weiteren Ausführungsform ein Display oder ein Drucker bei oder in der Heizungs- oder Klimaanlage vorgesehen, mit dem entsprechenden Informationen angezeigt oder ausgedruckt werden können.

Zusammengefaßt stellt die vorliegende Erfindung sowohl hinsichtlich der Fernsteuerung von Heizungs- und Klimaanlagen als auch hinsichtlich der Selbstdiagnose solcher Systeme eine neuartige Konzeption dar, die erstmals eine vollständige Fernüberwachung wie auch eine automatische Selbstdiagnose erlaubt und damit nicht nur den Betrieb und die Handhabung von Heizungs- und Klimaanlagen erheblich erleichtert, sondern auch in technischer wie wirtschaftlicher Hinsicht insbesondere für Servicezwecke besonders günstig ist. Sie erlaubt die Integration zahlreicher einzelner Heizungs- und Klimaanlagen in ein Gesamt-Überwachungssystem, mit dem z.B. eine zentralisierte Überwachung von einer einzigen Stelle aus möglich ist. So können z.B. auch kurzfristig, z.B. witterungsabhängig, temporäre Eingriffe in Heizungs- und Klimaanlagen vorgenommen werden, durch welche die Anlagen bei gleichem Komfort energiesparender betrieben werden können.

## Patentansprüche

1. Verfahren zur Übertragung, zum Empfang sowie zur Bearbeitung von Befehlsinformationen, die von einer externen Befehlseinrichtung (2; 6) stammen, bei Heizungs- und Klimaanlagen,
**gekennzeichnet** durch folgende Schritte:
(I) Herstellung einer Datenverbindung (La, Lb) zwischen der Befehlseinrichtung (2; 6) und einer Kommunikationseinrichtung (1), die der Steuer- oder Regeleinrichtung (8) der Heizungs- oder Klimaanlage zugeordnet ist,
(II) Codierung der zu übertragenden Befehlsinformation in der Befehlseinrichtung (2; 6),
(III) Übertragung der codierten Befehlsinformation von der Befehlseinrichtung (2, 6) zur Kommunikationseinrichtung (1),
(IV) Empfang und Decodierung der empfangenen Befehlsinformation von der Befehlseinrichtung (2; 6) in der Kommunikationseinrichtung (1)
und
(V) Bearbeitung bzw. Ausführung der decodierten Befehlsinformation in der Kommunikationseinrichtung (1) und/oder der Steuer- oder Regeleinrichtung (8) der Heizungs- oder Klimaanlage.

2. Verfahren zur Übertragung, zum Empfang sowie zur Bearbeitung von Befehlsinformationen, die von einer externen Leitstelle (24) stammen, bei Heizungs- und Klimaanlagen,
gekennzeichnet durch folgende Schritte:
(I) Herstellung einer Datenverbindung (17) zwischen der Leitstelle (24) und einer Kommunikationseinrichtung (1), die der Steuer- oder Regeleinrichtung (8) der Heizungs- oder Klimaanlage zugeordnet ist, in Form einer Direktverbindung,
(III) Übertragung der Befehlsinformation von der Leitstelle (24) zur Kommunikationseinrichtung (1),
(IV) Empfang der Befehlsinformation von der Leitstelle (24) in der Kommunikationseinrichtung (1)
und
(V) Bearbeitung bzw. Ausführung der Befehlsinformation in der Kommunikationseinrichtung (1) und/oder der Steuer- oder Regeleinrichtung (8) der Heizungs- oder Klimaanlage.

3. Verfahren zur Selbstdiagnose von Heizungs- und Klimaanlagen und zur automatischen Übertragung des Diagnoseergebnisses bzw. sich daraus ergebender Informationen von einer Kommunikationseinrichtung (1), die der Steuer- oder Regeleinrichtung (8) der Heizungs- oder Klimaanlage zugeordnet ist, zu einer Empfangseinrichtung (2; 3; 4; 5; 6),
gekennzeichnet durch folgende Schritte:
(A) Erfassung von diagnoserelevanten Daten von der Heizungs- oder Klimaanlage durch die Kommunikationseinrichtung (1),
(B) Bearbeitung der erfaßten Daten in der Kommunikationseinrichtung (1) mit Ermittlung der zu übertragenden Daten,
(C) Codierung der zu übertragenden Daten in der Kommunikationseinrichtung (1),
(D) Herstellung einer Datenverbindung (La, Lb) zwischen der Kommunikationseinrichtung (1) und der Empfangseinrichtung (2; 3; 4; 5; 6),
(E) Übertragung der zu übertragenden, codierten Daten von der Kommunikationseinrichtung (1) zur Empfangseinrichtung (2; 3; 4; 5; 6),
(F) Empfang und Decodierung der von der Kommunikationseinrichtung (1) empfangenen Daten in der Empfangseinrichtung (2; 3; 4; 5; 6)
und
(G) Bearbeitung und/oder Anzeige und/oder Ausdruck und/oder Speicherung der decodierten Daten oder sich daraus ergebender Informationen in der Empfangseinrichtung (2; 3; 4; 5; 6).

4. Verfahren zur Selbstdiagnose von Heizungs- und Klimaanlagen und zur automatischen Übertragung des Diagnoseergebnisses bzw. sich daraus ergebender Informatioenn von einer Kommunikationseinrichtung (1), die der Steuer- oder Regeleinrichtung (8) der Heizungs- oder Klimaanlage zugeordnet ist, zu einer Leitstelle (24),
gekennzeichnet durch folgende Schritte:
(A) Erfassung von diagnoserelevanten Daten von der Heizungs- oder Klimaanlage durch die Kommunikationseinrichtung (1),
(B) Bearbeitung der erfaßten Daten in der Kommunikationseinrichtung (1) mit Ermittlung der zu übertragenden Daten,
(D) Herstellung einer Datenverbindung (17) zwischen der Kommunikationseinrichtung (1) und der Leitstelle (24) in Form einer Direktverbindung (17),
(E) Übertragung der Daten von der Kommunikationseinrichtung (1) zur Leitstelle (24),
(F) Empfang der von der Kommunikationseinrichtung (1) empfangenen Daten in der Leitstelle (24)
und
(G) Bearbeitung und/oder Anzeige und/oder Ausdruck und/oder Speicherung der Daten oder sich daraus ergebender Informationen in der Leitstelle (24).

5. Verfahren nach Anspruch 1 oder 3, dadurch gekennzeichnet, daß in Schritt I bzw. Schritt D als Datenverbindung eine Telekommunikationsverbindung, insbesondere eine Telefonverbindung, einschließlich Funk- bzw. Satellitenfunkübertragungsstrecken, hergestellt wird.

6. Verfahren nach einem oder mehreren der Ansprüche 1, 3 und 5, dadurch gekennzeichnet, daß die Herstellung der Datenverbindung in Schritt I bzw. Schritt D manuell oder automatisch durch eine Steuereinrichtung vorgenommen wird, insbesondere durch ein Computersystem, das zur Durchführung des für das Telekommunikationssystem erforderlichen Wahlverfahrens (Impulswahlverfahren, Frequenzwahlverfahren) ausgelegt ist.

7. Verfahren nach einem oder mehreren der Ansprüche 1, 3, 5 und 6, dadurch gekennzeichnet, daß in Schritt II zur Codierung der zu übertragenden Befehlsinformation vor oder nach Herstellung der Datenverbindung zwischen der Befehlseinrichtung (2; 6) und der Kommunikationseinrichtung (1) der Code des Mehrfrequenz-Wahlverfahrens bzw. das DTMF-Verfahren angewandt und die empfangene codierte Befehlsinformation in Schritt IV nach dem DTMF-Verfahren decodiert wird.

8. Verfahren nach Anspruch 7, dadurch gekennzeichnet, daß in Schritt II die Befehlsinformation durch Drücken einer vorgegebenen Tastenkombination eines nach den DTMF-Verfahren arbeitenden bzw. darauf umgeschalteten Telefons codiert wird.

9. Verfahren nach einem oder mehreren der Ansprüche 1, 3 und 5 bis 8, dadurch gekennzeichnet, daß nach Schritt V ein Schritt VI durchgeführt wird, in dem eine Rückmeldung über die Ausführung der Befehlsinformation oder über eine andere damit in Zusammenhang stehende Information über die Datenverbindung an die Befehlseinrichtung (2; 6) übermittelt wird, vorzugsweise, solange die von der Befehlseinrichtung (2; 6) aufgebaute Datenverbindung bzw. Telefonverbindung noch besteht.

10. Verfahren nach Anspruch 9, dadurch gekennzeichnet, daß die Rückmeldung akustisch durch einen Signalton (z.B. an ein Telefon (2) oder ein Text-Telefon (3)), optisch durch Anzeige (z.B. mit Display eines Text-Telefons (3) oder in einer Leitstelle (6)), durch Cityruf oder Eurosignal (Cityruf-Gerät bzw. Eurosignal-Gerät (5)), durch Ausdruck einer Nachricht (z.B. per Fax durch Faxgerät (4) oder den Drucker einer Leitstelle (6)) und/oder durch eine Audio-Information über Lautsprecher (z.B. den Lautsprecher einer Leitstelle (6)) vorgenommen wird, wobei von üblichen Codier- und Decodierverfahren Gebrauch gemacht wird.

11. Verfahren nach Anspruch 2 oder 4, dadurch gekennzeichnet, daß in Schritt I bzw. in Schritt D als Datenverbindung eine elektrische Direktverbindung und/oder eine direkte Funkverbindung, ggfs. mit Verwendung entsprechender Modems, vorgesehen wird.

12. Verfahren nach einem oder mehreren der Ansprüche 1, 3 und 5 bis 11, dadurch gekennzeichnet, daß der Datenverkehr zwischen Befehlseinrichtung bzw. Empfangseinrichtung (2; 3; 4; 5; 6) und Kommunikationseinrichtung (1) über ein Telekommunikationssystem vorgenommen wird, das nach dem ISDN-Verfahren betrieben wird, wobei die Anwahl des jeweils anderen Teilnehmers nach dem DTMF-Verfahren vorgenommen wird und die Übertragung der Befehlsinformation bzw. der Diagnosedaten über teilnehmerseitig vorgesehene Modems erfolgt.

13. Kommunikationseinrichtung (1) für Heizungs- und Klimaanlagen,
die der Steuer- oder Regeleinrichtung (8) der Heizungs- oder Klimaanlage zugeordnet ist,
- zur Übertragung, zum Empfang sowie zur Bearbeitung von Befehlsinformationen, die von einer externen Befehlseinrichtung (2; 6; 24) stammen,
sowie
- zur Selbstdiagnose der Heizungs- oder Klimaanlage und zur automatischen Übertragung des Diagnoseergebnisses bzw. sich daraus ergebender Informationen zu einer Empfangseinrichtung (2; 3; 4; 5; 6; 24),
insbesondere zur Durchführung der Verfahren nach den Ansprüchen 1 bis 12,
mit folgenden Merkmalen:
- Die Kommunikationseinrichtung (1) weist folgende wesentliche Funktionsbaugruppen auf:
- Ein Mikrocomputersystem (11-14) mit einer CPU (11), einem RAM bzw. Schreiblesespeicher (12), einem ROM (13) und einer I/O-Einheit (14), die untereinander durch einen Adress- bzw. Datenbus verbunden sind,
- eine mit der I/O-Einheit (14) in Verbindung stehende oder mit ihr integrierte Übertragungseinrichtung, die entweder eine serielle Schnittstelle (15), die über eine Leitung (17) zur direkten Datenübertragung mit einer Leitstelle (24) oder einer Empfangseinrichtung (2; 3; 4; 5; 6) verbindbar ist, oder ein Terminal (9), das über einen Bus (AT) mit der I/O-Einheit (14) verbunden ist,
oder ein Modem (16) ist, das mit dem Bus des Mikrocomputersystems sowie mit der I/O-Einheit (14) in Verbindung steht und über Vermittlungskomponenten (20, 21) und über eine Leitung (La, Lb) mit einem Datenübertragungsnetz (7), vorzugsweise einem Telefonnetz (7), verbindbar ist,
und
- einen Busanschluß (23), der mit der Steuer- oder Regeleinrichtung (8) der Heizungs- oder Klimaanlage verbindbar ist und entweder direkt oder über die I/O-Einheit (14) mit dem Bus des Mikrocomputersystems verbunden ist;
- die Kommunikationseinrichtung (1) weist folgende wesentliche Funktionen auf:
- Direkter Empfang einer nichtcodierten Befehlsinformation von einer Befehlseinrichtung (2; 6; 24) über eine direkte Leitung (17)
oder
- Empfang einer codierten Befehlsinformation von einer Befehlseinrichtung (2; 6) und Decodierung der Befehlsinformation
und
- Bearbeitung bzw. Ausführung der Befehlsinformation mit dem Mikrocomputersystem (11-14), das über den Busanschluß (23) mit der Steuer- oder Regeleinrichtung (8) der Heizungs- oder Klimaanlage verbunden ist und im Zusammenwirken mit dem Mikrocomputersystem der Steuer- oder Regeleinrichtung (8) Bearbeitung bzw. Ausführung der Befehlsinformation veranlaßt;
- Erfassung diagnoserelevanter Daten von der Heizungs- oder Klimaanlage unter Zusammenwirken mit dem Mikrocomputersystem der Steuer- oder Regeleinrichtung (8) der Heizungs- oder Klimaanlage,
- Bearbeitung der erfaßten Daten mit Ermittlung der Daten, die zu einer oder mehreren vorgegebenen Empfangseinrichtungen (2; 3; 4; 5; 6; 24) zu übertragen sind,
und
- entweder direkte Übertragung der Daten zur Leitstelle (24) über die direkte Leitung (17)
oder
- Codierung der zu übertragenden Daten, Herstellung einer Datenverbindung über eine Leitung (La, Lb) mit einer Empfangseinrichtung (2; 3; 4; 5; 6) über das Modem (16) und Übertragung der codierten Daten zur Empfangseinrichtung (2; 3; 4; 5; 6).

14. Kommunikationseinrichtung nach Anspruch 13, dadurch gekennzeichnet, daß die Vermittlungskomponenten (20, 21) eine Anruferkennungseinrichtung (AE, 20), die mit der Leitung (La, Lb) verbindbar ist, und eine ihr nachgeschaltete Impulswahlbaugruppe (IWB, 21) sind, wobei die Impulswahlbaugruppe (IWB, 21) mit dem Modem (M, 16) verbunden ist und zum Impulswahl-Verbindungsaufbau vorgesehen ist.

15. Kommunikationseinrichtung nach Anspruch 13 und/oder 14, dadurch gekennzeichnet, daß eine DTMF-Empfangs- und -Sendeeinrichtung (22) vorgesehen ist, die mit dem Bus des Mikrocomputersystems (11, 12, 13, 14) in Verbindung steht und in DTMF-Sendefunktion Frequenzwahlsignale über die Leitung (La, Lb) abzugeben erlaubt und in DTMF-Empfangsfunktion DTMF-codierte Signale decodiert.

16. Kommunikationseinrichtung nach Anspruch 15, dadurch gekennzeichnet, daß die DTMF-Empfangs- und -Sendeeinrichtung (22) mit dem Modem (16) integriert ist.

17. Heizungs- oder Klimaanlage, gekennzeichnet durch eine Kommunikationseinrichtung nach einem der Ansprüche 13 bis 16.

18. Anwendung eines Mehrfrequenzverfahrens (DTMF-Verfahrens) zur Codierung von Befehlsinformationen, die über ein Telekommunikationsnetz einer Heizungs- oder Klimaanlage übertragen werden, und DTMF-Decodierung der erhaltenen Befehlsinformationen in der Steuereinrichtung (8) der Heizungs- oder Klimaanlage oder einer ihr zugeordneten Kommunikationseinrichtung (1).
